# EUROPÄISCHE PATENTSCHRIFT

(11) **EP 2 734 321 B1**
(45) Veröffentlichungstag und Bekanntmachung des Hinweises auf die Patenterteilung: **28.09.2016**
(21) Anmeldenummer: 12740127.1
(22) Anmeldetag: 23.07.2012
(51) Int. Cl.: B22C 1/02, B22C 1/08

(54) **SPEISER UND FORMBARE ZUSAMMENSETZUNGEN ZU DEREN HERSTELLUNG**
FEEDER AND SHAPEABLE COMPOSITION FOR PRODUCTION THEREOF
MASSELOTTES ET COMPOSITIONS FAÇONNABLES POUR LA FABRICATION DESDITES MASSELOTTES

(30) Priorität: 22.07.2011 DE 102011079692
(43) Veröffentlichungstag der Anmeldung: 28.05.2014
(73) Patentinhaber: Chemex GmbH, 31073 Delligsen (DE)
(72) Erfinder: RECKNAGEL, Ulrich, 08058 Zwickau (DE); LANVER, Ulrich, 40764 Langenfeld (DE)
(74) Vertreter: Eisenführ Speiser
(86) Internationale Anmeldenummer: PCT/EP2012/064378
(87) Internationale Veröffentlichungsnummer: WO 2013/014118

(56) Entgegenhaltungen:
- DE-A1- 3 516 033
- DE-A1- 19 731 653
- GB-A- 1 432 707

## Beschreibung

Die vorliegende Erfindung betrifft die Verwendung eines Leichtfüllstoffs in einer formbaren Zusammensetzung für die Herstellung von Speisern für die Gießereiindustrie, entsprechende formbare Zusammensetzungen und ihre Herstellung sowie Speiser für die Gießereündustrie. Der Begriff "Speiser" umfasst dabei im Rahmen der vorliegenden Unterlagen sowohl Speiserumhüllungen, Speisereinsätze und Speiserkappen als auch Heizkissen.

Bei der Herstellung von metallischen Formteilen in der Gießereiindustrie wird flüssiges Metall in eine Gießform eingefüllt und erstarrt dort. Der Erstarrungsvorgang ist mit einer Verringerung des Metallvolumens verbunden; und es werden deshalb regelmäßig Speiser in oder an der Gießform eingesetzt, um das Volumendefizit bei der Erstarrung des Gussstücks auszugleichen und so eine Lunkerbildung im Gussstück zu verhindern. Die Speiser sind mit dem Gussstück bzw. mit dem gefährdeten Gussstückbereich verbunden und befinden sich für gewöhnlich oberhalb und/oder an der Seite des Formhohlraums.

Hinsichtlich der bisher bekannten Zusammensetzungen zur Herstellung von Speisern für die Gießereiindustrie werden zwei Hauptgruppen unterschieden:
A. Isoliermassen, d.h. formbare und aushärtbare Zusammensetzungen (Massen) zur Herstellung von wärmeisolierenden Speiserumhüllungen oder Isolierkissen bzw. - taschen. Die (ausgehärtete) Isoliermasse nimmt beim Abgießen der Form zuerst etwas Wärme aus dem flüssigen Metall auf, bis sich ein Temperaturausgleich einstellt; von diesem Zeitpunkt an schützt die Isoliermasse das flüssige Gießmetall für eine gewisse Zeit gegen weitere Wärmeverluste. Aus Isoliermassen geformte Speiser oder Isoliertaschen verzögern somit den Erstarrungsbeginn und fördern die Dichtspeisung eines Gussstücks. Isoliermassen umfassen regelmäßig mindestens einen partikularen (körnigen) Füllstoff und ein Bindemittel.
B. Exotherme Speiserheizmassen, d.h. form- und aushärtbare exotherme Zusammensetzungen (Massen), die sich durch eine aluminothermische oder ähnliche Reaktion während des Abgießens der Form selbst erwärmen. Aus exothermen Speiserheizmassen (auch exotherme Formstoffe genannt) lassen sich Speiser herstellen, die in die Form eingesetzt werden und in Berührung mit der Schmelze Wärme erzeugen können. Die Wärmeabgabe erfolgt dabei aufgrund der aluminothermischen oder ähnlichen Umsetzungsreaktion in der Heizmasse. Die frei werdende Wärme dient in Ausnahmefällen zur Aufheizung des flüssigen Metalls im Speiser, in jedem Falle aber zur (teilweisen) Kompensation der Wärmeverluste. Bei Verwendung von Speisern mit exothermen Heizmassen bleibt das Metall im Vergleich zu Speisern auf der Basis von Isoliermassen (siehe oben A) länger flüssig. Man kann deshalb die Dichtspeisung eines Gussstücks verbessern und gegebenenfalls kleinere Speiser verwenden, so dass der Kreislaufanteil gesenkt und das Gussausbringen erhöht wird. Exotherme Speiserheizmassen sind aber deutlich teurer als Isoliermassen. Exotherme Speiserheizmassen umfassen regelmäßig mindestens einen partikularen (körnigen) Füllstoff, ein Bindemittel, einen relativ hohen Anteil an einem oxidierbaren Metall sowie ein Oxidationsmittel für das oxidierbare Metall (z.B. Kalium- oder Natriumnitrat). Das oxidierbare Metall ist vorzugsweise ein unedles Metall. Bevorzugt ist das oxidierbare Metall ausgewählt aus der Gruppe bestehend aus Aluminium, Magnesium, Calcium und Silicium.

Aus der DE 10 2005 025 771 ist ein isolierender Speiser umfassend keramische Hohlkugeln, Glas-Hohlkugeln mit einer Schüttdichte von weniger als 0,3 g/cm³, ausgehärtetes Bindemittel und gegebenenfalls Fasermaterial bekannt. Das Gewichtsverhältnis von keramischen Hohlkugeln zu Glas-Hohlkugeln liegt dabei im Bereich von 1:1 bis 10:1, vorzugsweise im Bereich von 2:1 bis 6:1, und die Gesamtmenge von Glas-Hohlkugeln und keramischen Hohlkugeln liegt im Bereich von 40 bis 80 Gew.-%, vorzugsweise im Bereich von 40 bis 60 Gew.-%, bezogen auf die Gesamtmasse des Speisers. Gegebenenfalls enthält der Speiser gemäß DE 10 2005 025 771 weitere Materialien, die sich als Füllstoffe bezeichnen lassen. Vorteilhaft ist z.B. bei Einsatz eines Nanokomposit-Binders die Anwesenheit biogener Kieselsäure, z.B. in Form von Reisschalenasche (gemäß DE 10 2005 025 771 erhältlich unter der Produktbezeichnung Silimat^{®}G (derzeitige Produktbezeichnung Nermat AF) bei der Firma Refratechnik Casting GmbH).

Reisschalenasche besteht zu über 90 Gew.-%, üblicherweise zu 92 bis 97 Gew.-% aus Siliciumdioxid (Kieselsäure). Reisschalenasche des Typs Nermat AF enthält bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid einen Gesamtanteil von weniger 70 Gew.-% von (i) kristallinen Modifikationen des Siliciumdioxids und (ii) monoklinem Feldspat, während der Anteil (iii) des amorphen Siliciumdioxids an der Gesamtmenge der durch quantitative Phasenanalyse mittels Röntgendiffraktometrie nachweisbaren Bestandteile der Reisschalenasche 30 Gew.-% oder mehr, häufig sogar über 40 Gew.-% beträgt. Der Kohlenstoffgehalt von Reisschalenasche des Typs Nermat AF beträgt bis zu 1,5 Gew.-%. Bezogen auf die Gesamtmasse der formbaren Zusammensetzung, die zur Herstellung des isolierenden Speisers eingesetzt wurde, kann die Menge dieser Reisschalenasche bis zu 15 Gew.-% betragen und liegt üblicherweise zwischen 3 und 5 Gew.-%.

DE 197 28 368 C1 offenbart ein Isoliermaterial für den Stahlguss bestehend aus feinpulvrigen sauren oder basischen Isoliermitteln, die in einer Matrix eines gelbildenden Materials zu Granulaten vereinigt sind. Als Beispiel für ein saures Isoliermittel (Abdeckmittel) wird Reisschalenasche offenbart. Gemäß DE 197 28 368 C1 liegt der Großteil der Kieselsäure in der Reisschalenasche in amorpher Form vor, jedoch wird bei der Verbrennung von Reisschalen auch ein Anteil an Siliciumdioxid, der zwischen 5 und 30% liegen kann, in kristalline Form überführt.

DE 197 31 653 C2 offenbart ein Verfahren zur Herstellung von Kügelchen oder Pellets aus Reisschalenasche, die als Wärmedämmstoff nützlich sind. Gemäß DE 197 31 653 C2 lässt Reisschale, wenn sie verbrannt wird, eine Asche zurück, die hauptsächlich aus Siliciumdioxid in amorpher Form besteht.

US 4,555,448 A1 offenbart ein Material zur thermischen Isolierung, das Partikel biogenen Siliciumdioxids im amorphen Zustand enthält, vorzugsweise Reisschalenasche.

Für den Einsatz in Speisern geeignete Hohlkugeln sind nicht uneingeschränkt verfügbar. Es war daher die Aufgabe der vorliegenden Erfindung, einen Leichtfüllstoff anzugeben, der in formbaren Zusammensetzungen für die Herstellung von Speisern als zumindest teilweiser Ersatz für die derzeit vorwiegend verwendeten Hohlkugeln dienen kann, sowie einen entsprechenden Speiser bereitzustellen. Durch den Ersatz der Hohlkugeln sollte weder die Isolierwirkung noch die Festigkeit des Speisers beeinträchtigt werden. Der Leichtfüllstoff sollte daher die folgenden primären Anforderungen erfüllen:
- thermische Stabilität auch bei Temperaturen von mehr als 1400 °C, vorzugsweise bei Temperaturen von mehr als 1500 °C;
- ausreichende mechanische Stabilität auch bei Temperaturen von mehr als 1400 °C, vorzugsweise bei Temperaturen von mehr als 1500 °C;
- geringe oder keine Staubanhaftung;
- Schüttdichte unter 800 g/l;
- Wärmeleitfähigkeit unterhalb vom 0,15 W/mK bei 100 °C und unterhalb von 0,5 W/mK bei 1000 °C.

Im Rahmen der vorliegenden Unterlagen gilt ein Partikel oder Material als beständig (stabil), wenn es unterhalb einer gegebenen Temperatur weder schmilzt noch unter Verlust der räumlichen Gestalt erweicht oder sich zersetzt.

Darüber hinaus sollte der Leichtfüllstoff sowohl für isolierende als auch für exotherme Speiser geeignet sein.

Die Erfindung betrifft außerdem Speiser zur Verwendung in der Gießereiindustrie, formbare Zusammensetzungen zur Herstellung von Speisern sowie Verfahren zur Herstellung formbarer Zusammensetzungen für die Herstellung von Speisern.

Die gestellte Aufgabe wird erfindungsgemäß gelöst durch die Verwendung von Reisschalenasche, die bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid einen Gesamtanteil von mindestens 70 Gew.-%, vorzugsweise mehr als 75 Gew.-% von (i) kristallinen Modifikationen des Siliciumdioxids und (ii) monoklinem Feldspat enthält, als Leichtfüllstoff in einer formbaren Zusammensetzung für die Herstellung von Speisern für die Gießereiindustrie, sowie durch einen Speiser umfassend (a) Reisschalenasche enthaltend bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid einen Gesamtanteil von mindestens 70 Gew.-%, vorzugsweise mehr als 75 Gew.-% von (i) kristallinen Modifikationen des Siliciumdioxids und (ii) monoklinem Feldspat, wobei bezogen auf die Gesamtmasse der formbaren Zusammensetzung des Speisers die Menge dieser Reisschalenasche im Bereich von 5 bis 50 Gew.-%, vorzugsweise 5 bis 25 Gew.-% liegt, (b) ausgehärtetes Bindemittel, (c) optional Fasermaterial, (d) gegebenenfalls einen oder mehrere weitere Füllstoffe sowie (e) optional (im Fall eines exothermen Speisers) ein oxidierbares Metall (wie z.B. Aluminium, Magnesium oder Silicium) und ein Oxidationsmittel für das oxidierbare Metall.

Erfindungsgemäß einzusetzende Reisschalenasche (a), die bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid einen Gesamtanteil von mindestens 70 Gew.-%, vorzugsweise mehr als 75 Gew.-% von (i) kristallinen Modifikationen des Siliciumdioxids und (ii) monoklinem Feldspat enthält, wird im folgenden auch als hochkristalline Reisschalenasche bezeichnet.

Die aus den Dokumenten DE 197 28 368 C1, DE 197 31 653 C2 und US 4,555,448 A1 bekannte Reisschalenasche ist keine hochkristalline Reisschalenasche im Sinne der obigen Definition, da sie Siliciumdioxid überwiegend in amorpher Form enthält. Entsprechendes gilt für die gemäß DE 10 2005 025 771 eingesetzte Reisschalenasche. Aus DE 10 2005 025 771 geht nämlich nicht hervor, dass die dort eingesetzte Reisschalenasche anders als durch den üblichen Prozess der Verbrennung von Reisschalen hergestellt wurde, bei dem, wie aus den Dokumenten DE 197 28 368 C1, DE 197 31 653 C2 und US 4,555,448 A1 bekannt, eine Reisschalenasche entsteht, die Siliciumdioxid überwiegend in amorpher Form enthält.

Feldspat ist ein Aluminiumsilicat mit einer Zusammensetzung innerhalb des ternären Systems K₂O·Al₂O₃·6 SiO₂ - Na₂O·AL₂O₃·6 SiO₂ - CaOAl₂O₃·2 SiO₂.

Reisschalenasche enthält typischerweise zwischen 92 und 97 Gew.-% Siliciumdioxid, die restlichen relevanten Bestandteile sind Oxide von Natrium, Kalium, Calcium, Magnesium, Aluminium und Eisen sowie Kohlenstoff und Wasser (als Feuchte sowie als Kristallwasser). In der in erfindungsgemäßen Speisern einzusetzenden hochkristallinen Reisschalenasche (a) wird vorzugsweise ein Anteil von mehr als 75 Gew.% der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid durch (i) kristalline Modifikationen des Siliciumdioxids und (ii) Feldspat gebildet, während der Anteil (iii) des amorphen Siliciumdioxids an der Gesamtmenge der durch quantitative Phasenanalyse mittels Röntgendiffraktometrie nachweisbaren Bestandteile der Reisschalenasche weniger als 25 Gew.-%, besonders bevorzugt weniger als 20 Gew.-% oder sogar weniger als 15 Gew.-% beträgt. Der in Form kristalliner Modifikationen vorliegende Anteil (i) des in der hochkristallinen Reisschalenasche (a) enthaltenen Siliciumdioxids enthält Anteile einer oder mehrerer kristalliner Modifikationen des Siliciumdioxids aus der Gruppe bestehend aus Cristobalit, Tridymit, Quarz. Gegebenenfalls enthält die hochkristalline Reisschalenasche (a) weiterhin (ii) monoklinen Feldspat.

Die Anwendung der Röntgendiffraktometrie von polykristallinen und amorphen Materialien zur zerstörungsfreien Prüfung wird u.a. in der Norm DIN EN 13925-1 beschreiben. Die Röntgenpulverdiffraktometrie (XRPD - X-Ray Powder Diffraction) ist eine Methode der zerstörungsfreien Prüfung (ZfP), die es gestattet, die Art und Menge der in einer Probe enthaltenen Phasen zu bestimmen. Unter einer "Phase" (im Sinne eine "kristallografischen Phase" oder eine "thermodynamischen Phase") wird ein Teil eines physikalischen Systems verstanden, das eine gemeinsame molekulare oder zwischenmolekulare Struktur teilt, unabhängig von einer weiteren Unterteilung hinsichtlich der Größenverteilung oder der Form. Wenn die zu analysierende Probe eine Mischung aus zwei oder mehreren bekannten Phasen ist (die z. B. im Ergebnis einer röntgenografischen Phasenidentifikation bestimmt wurden), von der mindestens eine kristallin ist, dann kann der Volumen- oder Massengehalt jeder der kristallinen Phasen und des amorphen Anteils bestimmt werden. Die quantitative Phasenanalyse beruht auf der Auswertung von Integralintensitäten einer oder mehrerer Beugungslinien, wobei Peakhöhen in bestimmten Fällen als eine Näherung zu den Integralintensitäten verwendet werden.

Der durch Röntgenfluoreszenzanalyse ermittelte Kohlenstoffgehalt der in erfindungsgemäßen Speisern einzusetzenden Reisschalenasche (a) beträgt weniger als 1 Gew.-%, vorzugsweise weniger als 0,1 Gew.-%.

Eine erfindungsgemäß einzusetzende hochkristalline Reisschalenasche (a) besitzt vorzugsweise eine Korngröße im Bereich von 0,2 bis 2 mm, besonders bevorzugt eine Korngröße im Bereich von 0,2 bis 1,5 mm. Die Fraktion mit der gewünschten Korngröße wird durch Absieben erhalten. Es erfolgt kein Mahlen oder Pulverisieren der Reisschalenasche.

Die Schüttdichte einer in erfindungsgemäßen Speisern einzusetzenden hochkristallinen Reisschalenasche (a) beträgt typischerweise 200 bis 400 g/Liter, bevorzugt 200 bis 300 g/Liter.

Die Wärmeleitfähigkeit einer in erfindungsgemäßen Speisern einzusetzenden hochkristallinen Reisschalenasche (a) beträgt typischerweise 0,12 bis 0,13 W/mK bei 100 °C und 0,39 bis 0,4 W/mK bei 1000 °C.

Hinsichtlich der Wärmeleitfähigkeit und der Schüttdichte weist die in erfindungsgemäßen Speisern einzusetzende Reisschalenasche (a) überraschenderweise vergleichbare Werte auf wie die typischerweise als körniger Füllstoff eingesetzten keramischen Hohlkugeln, die jedoch wie oben angegeben nicht uneingeschränkt verfügbar sind. Daher kann dieser herkömmliche Füllstoff in Speisern teilweise oder vollständig durch Reisschalenasche (a), die bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid einen Gesamtanteil von mindestens 70 Gew.-%, vorzugsweise mehr als 75 Gew.-% von (i) kristallinen Modifikationen des Siliciumdioxids und (ii) monoklinem Feldspat enthält, ersetzt werden, so wie es in der erfindungsgemäßen Speisern der Fall ist.

Erfindungsgemäß bevorzugt ist in erfindungsgemäßen Speisern der Einsatz von hochkristalliner Reisschalenasche (a) mit folgenden Merkmalen:
- Kohlenstoffgehalt von weniger als 1 Gew.-%, vorzugsweise weniger als 0,1 Gew.-%,
   und/oder
- Korngröße von 0,2 bis 2 mm, vorzugsweise 0,2 bis 1,5 mm,
   und/oder
- Schüttdichte von (a) 200 bis 400 g/Liter,
   und/oder
- Wärmeleitfähigkeit von 0,12 bis 0,13 W/mK bei 100 °C und 0,39 bis 0,4 W/mK bei 1000 °C .

Vorzugsweise liegen sämtliche dieser Eigenschaften gleichzeitig vor.

Die Feuerfestigkeit einer in erfindungsgemäßen Speisern einsetzbaren hochkristallinen Reisschalenasche (a) wurde durch Ermittlung des Kegelfallpunkts nach DIN EN 933-12/13/DIN 51060 bestimmt, es wurde eine Referenztemperatur von > 1640 °C ermittelt.

Eine in erfindungsgemäßen Speisern einzusetzende hochkristalline Reisschalenasche (a) ist erhältlich, indem Reisschalenasche, die bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid einen Gesamtanteil von weniger als 70 Gew.-% von (i) kristallinen Modifikationen des Siliciumdioxids und (ii) monoklinem Feldspat enthält, bei einer Temperatur von mindestens 1300 °C, vorzugsweise mindestens 1400 °C solange thermisch behandelt wird, bis bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid der Gesamtanteil von (i) kristallinen Modifikationen des Siliciumdioxids und (ii) monoklinem Feldspat auf mindestens 70 Gew.-%, vorzugsweise mehr als 75 Gew.-%, angestiegen ist.

Eine in erfindungsgemäßen Speisern einzusetzende hochkristalline Reisschalenasche (a) ist beispielsweise durch thermische Behandlung von sogenannter schwarzer, d.h. kohlenstoffreicher Reisschalenasche bei Temperaturen von mindestens 1300 °C, vorzugsweise mindestens 1400 °C erhältlich. Schwarze Reisschalenasche ist beispielsweise unter der Produktbezeichnung Nermat AF bei der Firma Refratechnik Casting GmbH erhältlich. Dieser Typ Reisschalenasche umfasst 92 bis 97 Gew.-% Siliciumdioxid und bis zu 5 Gew.-% Kohlenstoff, die restlichen Bestandteile sind Oxide von Natrium, Kalium, Calcium, Magnesium, Aluminium und Eisen sowie Wasser (als Feuchte sowie als Kristallwasser). Das in diesem Typ Reisschalenasche enthaltene Siliciumdioxid weist einen Anteil von weniger als 55 Gew.-% in Form kristalliner Modifikationen auf, d.h. mindestens 45 Gew.-%, typischerweise mehr als 50 Gew.-% oder sogar mehr als 55 Gew.-% des enthaltenen Siliciumdioxids liegen als amorphes Siliciumdioxid vor. In diesem Typ Reisschalenasche umfasst der in Form kristalliner Modifikationen vorliegende Anteil des Siliciumdioxids vorwiegend Cristobalit sowie kleinere Anteile von Tridymit und Quarz. Die Partikel dieses Typs Reisschalenasche weisen aufgrund des relativ hohen Kohlenstoffgehalts eine schwärzliche Farbe auf. Wegen seiner ungenügenden mechanischen Stabilität ist dieser Typ Reisschalenasche nur begrenzt für den Einsatz als Füllstoff in Speisern geeignet, insbesondere ist dieser Typ Reisschalenasche für nach dem Cold-Box-Verfahren hergestellte Speiser nicht bevorzugt.

Bei Temperaturen ab etwa 1300 °C, vorzugsweise mindestens 1400 °C durchläuft diese schwarze Reisschalenasche - so das bisherige Verständnis nach Auswertung eigener Untersuchungen - einen Sinterprozess, der eine Kornverfestigung bewirkt. Dabei wird der in amorpher Form vorliegende Anteil des in der Reisschalenasche enthaltenen Siliciumdioxids so weit in kristalline Modifikationen umgewandelt, dass die Reisschalenasche, bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid einen Gesamtanteil von mindestens 70 Gew.-%, vorzugsweise mehr als 75 Gew.-% von (i) kristallinen Modifikationen des Siliciumdioxids und (ii) monoklinem Feldspat enthält, während der verbleibende Anteil (iii) des amorphen Siliciumdioxids an der Gesamtmenge der durch quantitative Phasenanalyse mittels Röntgendiffraktometrie nachweisbaren Bestandteile der Reisschalenasche 30 Gew.-% oder weniger beträgt. Gleichzeitig wird der enthaltene Kohlenstoff weitgehend oxidiert, so dass die ursprünglich schwärzliche Farbe der Reisschalenasche zunächst in einen grauen und schließlich in einen rosa Farbton übergeht.

Bei Untersuchungen des thermischen Sinterverhaltens der schwarzen Reisschalenasche mittels eines Erhitzungsmikroskops wurde beobachtet, dass sie bei Temperaturen zwischen 1400 und 1600 °C sintert, bei 1720 °C den Halbkugelpunkt erreicht, und der Fließpunkt bei > 1738 °C liegt. Durch den Sinterprozess nimmt die ursprünglich schwärzliche Reisschalenasche eine stabile Kornform an, so dass sich die mechanische Festigkeit der Partikel erhöht. Die durch den Sinterprozess erzielte Verfestigung steigt mit zunehmender Temperatur der thermischen Behandlung. Das günstigste Sintertemperaturintervall liegt bei 1400 bis 1500 °C, denn in diesem Temperaturbereich führt das Sintern der Reisschalenasche noch nicht zu einer Verfestigung der Partikel untereinander. Das Erreichen des rosa Farbtons kann als Anhaltspunkt für die Vollständigkeit des Sinterprozesses herangezogen werden. Demnach wird schwarze Reisschalenasche bei einer Temperatur von vorzugsweise mindestens 1300 °C, vorzugsweise zwischen 1400 und 1500 °C, mindestens solange thermisch behandelt, bis die Reisschalenasche einen rosa Farbton angenommen hat.

Erfindungsgemäß einzusetzende hochkristalline Reisschalenasche (a), die wie oben beschrieben durch thermische Behandlung bei Temperaturen von mindestens 1300 °C, vorzugsweise mindestens 1400 °C erhalten wurde, wurde auf ihr thermisches Sinterverhalten untersucht. Dabei wurde festgestellt, das erfindungsgemäß einzusetzende hochkristalline Reisschalenasche (a), welche bei Temperaturen von mindestens 1300 °C, vorzugsweise mindestens 1400 °C thermisch behandelt wurde, eine höhere Temperatur des Sinterbeginns aufweist als Reisschalenasche, die nicht bei Temperaturen von mindestens 1300 °C, vorzugsweise mindestens 1400 °C thermisch behandelt wurde. Während das Ausgangsmaterial für die in erfindungsgemäßen Speisern einzusetzende Reisschalenasche (Nermat AF) bei 1400 °C zu sintern beginnt, weist Reisschalenasche, die bei einer Temperatur von mindestens 1300 °C, vorzugsweise mindestens 1400 °C thermisch behandelt wurde, einen Sinterbeginn bei einer Temperatur von 1550 °C oder höher auf. Es wird gegenwärtig angenommen, dass die beim Sintern erfolgende Umwandlung amorphen Siliciumdioxids in kristalline Modifikationen zu einer Verfestigung der Reisschalenasche beiträgt, so dass die für den Einsatz in Speisern nötige Materialstabilität erreicht wird.

Ein erfindungsgemäßer Speiser umfasst ausgehärtetes Bindemittel (b). Unter ausgehärtetem Bindemittel (b) wird das Aushärtungsprodukt eines Bindemittels oder eines Bindemittelsystems verstanden, wobei sämtliche zur Herstellung von Speisern üblicherweise verwendeten Bindemittel und -systeme einsetzbar sind, z.B. Duroplastbildner, Stärke oder Silikatbildner wie z.B. Wasserglas. Bezogen auf die Gesamtmasse der formbaren Zusammensetzung des Speisers liegt die Menge des ausgehärteten Bindemittels (b) im Bereich von 4 bis 35 Gew.-%.

Bevorzugt erfolgt die Herstellung des erfindungsgemäßen Speisers im Cold-Box-Verfahren. Als Bindemittelsystem wird dabei vorteilhafterweise ein Zwei-Komponenten-System eingesetzt, das ein freie Hydroxylgruppen (OH-Gruppen) enthaltendes Phenolharz und ein Poly-Isocyanat als Reaktionspartner umfasst. Durch Begasung mit einem tertiären Amin härtet dieses Bindemittelsystem zu einem Polyurethan aus. Das ausgehärtete Bindemittel ist demnach das Aushärtungsprodukt eines Zwei-Komponenten-Systems, das ein freie Hydroxylgruppen enthaltendes Phenolharz und ein Poly-Isocyanat als Reaktionspartner umfasst. Bei diesem Bindemittelsystem ist die Verwendung bestimmter Fettsäuremethylester als Lösungsmittel bevorzugt, wie sie in der Europäischen Patentanmeldung EP 0 804 980 A1 beschrieben sind; unter den Fettsäuremethylestern ist wiederum die Verwendung von Rapsölmethylester vorteilhalt. Die Anwendung des Cold-Box-Verfahrens zur Herstellung der erfindungsgemäßen Speiser ist aber nicht auf die in der EP 0 804 980 A1 beschriebenen Binde- und Lösungsmittel beschränkt, weitere für das Cold-Box Verfahren geeignete Bindemittelzusammensetzungen und Verfahrenstechniken können den Europäischen Patentschriften EP 0 888 199 B1 und EP 0 913 215 B1 entnommen werden. Die Offenbarung der genannten EP-Veröffentlichungen ist im Wege der Verweisung Bestandteil des vorliegenden Textes. Die dort jeweils offenbarten Zusammensetzungen der Speiser werden durch teilweisen oder vollständigen Austausch eines oder mehrerer dort angegebenen Füllstoffs durch hochkristalline Reisschalenasche (a) zu erfindungsgemäßen Zusammensetzungen.

Ein erfindungsgemäßer Speiser umfasst in manchen Fällen neben der oben beschriebenen hochkristallinen Reisschalenasche (a), die bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid einen Gesamtanteil von mindestens 70 Gew.-%, vorzugsweise mehr als 75 Gew.-% von (i) kristallinen Modifikationen des Siliciumdioxids und (ii) monoklinem Feldspat enthält, weitere Füllstoffe (d). Beispielsweise kann der erfindungsgemäße Speiser neben Reisschalenasche (a), die bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid einen Gesamtanteil von mindestens 70 Gew.-%, vorzugsweise mehr als 75 Gew.-% von (i) kristallinen Modifikationen des Siliciumdioxids und (ii) monoklinem Feldspat enthält , auch (d) herkömmlicherweise als Leichtfüllstoff verwendete Hohlkugeln (wie oben beschrieben) enthalten, d.h. im Vergleich zu herkömmlichen Speisern sind die Hohlkugeln (d) nur teilweise durch die oben beschriebene hochkristalline Reisschalenasche (a) ersetzt. Enthält der erfindungsgemäße Speiser als weiteren Füllstoff (d) Hohlkugeln, dann liegt bezogen auf die Gesamtmasse der formbaren Zusammensetzung die Gesamtmenge an (a) hochkristalliner Reisschalenasche und (d) Hohlkugeln im Bereich von 5 bis 90 Gew.-%, bevorzugt von 5 bis 25 Gew.-%, wobei das Gewichtsverhältnis von (a) hochkristalliner Reisschalenasche zu (d) Hohlkugeln mindestens 0,1 beträgt. Erfindungsgemäß besonders bevorzugt ist jedoch die ausschließliche Verwendung von hochkristalliner Reisschalenasche.

Sonstige Füllstoffe (d) sind ausgewählt aus der Gruppe bestehend aus Kaolin, Sand, Quarzsand, Schamottesand und/oder Koksgrieß sowie feindispersen, inerten Metalloxiden wie denen des Titan, Aluminium oder Silizium sowie solchen Typen von Reisschalenasche, die bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid einen Gesamtanteil von weniger als 70 Gew.-% von (i) kristallinen Modifikationen des Siliciumdioxids und (ii) monoklinem Feldspat enthält. D.h. der Anteil (iii) des amorphen Siliciumdioxids an der Gesamtmenge der durch quantitative Phasenanalyse mittels Röntgendiffraktometrie nachweisbaren Bestandteile der Reisschalenasche ist größer als 30 Gew.-%, gegebenenfalls sogar größer als 40 Gew.-%. Derartige Reisschalenasche ist beispielsweise unter der Produktbezeichnung Nermat AF bei der Firma Refratechnik Casting GmbH erhältlich. Erfolgt die Herstellung des Speisers nach dem Slurry-Verfahren, so ist auch die kohlenstoffreiche schwarze Reisschalenasche z.B. des oben genannten Typs Nermat AF als Füllstoff geeignet. Die Anwesenheit dieses Typs von Reisschalenasche ist jedoch in einem Cold-Box-Verfahren zur Herstellung erfindungsgemäßer Speiser nicht bevorzugt. Enthält der erfindungsgemäße Speiser als weiteren Füllstoff (d) Reisschalenasche, die bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid einen Gesamtanteil von weniger als 70 Gew.-% von (i) kristallinen Modifikationen des Siliciumdioxids und (ii) monoklinem Feldspat enthält, dann beträgt bezogen auf die formbare Zusammensetzung des Speisers die Menge solcher Reisschalenasche (d) höchstens 10 Gew.-%.

Die Anwesenheit von Fasermaterial (c) in erfindungsgemäßen Speisern ist oft vorteilhaft, weil Fasern eine zusätzliche Armierung des Speisers bewirken. Bevorzugt werden organische Fasermaterialien eingesetzt, während auf den Einsatz anorganischer Fasermaterialien verzichtet werden sollte. Ein solcher Verzicht auf anorganische Fasermaterialien erlaubt eine gesundheitlich unbedenklichere Herstellung erfindungsgemäßer Speiser, da aus anorganischen Fasern lungengängige Partikel abbrechen können. Vorzugsweise werden in erfindungsgemäßen Speisern Cellulosefasern eingesetzt, denn diese zeichnen sich durch ihr geringes Gewicht aus. Vorzugsweise liegt die Faserlänge der eingesetzten Cellulosefasern dabei im Bereich von 30 bis 800 µm.

Eine erfindungsgemäße formbare Zusammensetzung für die Herstellung von Speisern für die Gießereiindustrie umfasst (a) hochkristalline Reisschalenasche enthaltend bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid einen Gesamtanteil von mindestens 70 Gew.%, vorzugsweise mehr als 75 Gew.-% von (i) kristallinen Modifikationen des Siliciumdioxids und (ii) monoklinem Feldspat, wobei bezogen auf die Gesamtmasse der formbaren Zusammensetzung die Menge dieser hochkristallinen Reisschalenasche im Bereich von 5 bis 50 Gew.-%, vorzugsweise 5 bis 25 Gew.-% liegt, (b) Bindemittel, (c) optional Fasermaterial, (d) gegebenenfalls einen oder mehrere weitere Füllstoffe, sowie (e) optional (für exotherme Speiser) mindestens ein oxidierbares Metall (wie Aluminium, Magnesium oder Silicium) und ein Oxidationsmittel für das oxidierbare Metall.

Bezüglich der Herstellung und weiterer Eigenschaften und Merkmale der für die erfindungsgemäße formbare Zusammensetzung einzusetzenden Reisschalenasche (a) sowie bevorzugten Bindemitteln (b), Fasermaterialien (c) und weiteren Füllstoffen (d) wird auf die vorstehenden Ausführungen verwiesen. Als Bindemittel (b) kann auch ein Bindemittelsystem eingesetzt werden.

Enthält die erfindungsgemäße formbare Zusammensetzung als weiteren Füllstoff (d) Hohlkugeln, dann liegt bezogen auf die Gesamtmasse der formbaren Zusammensetzung die Gesamtmenge an (a) hochkristalliner Reisschalenasche, und (d) Hohlkugeln im Bereich von 5 bis 90 Gew.-%, bevorzugt von 5 bis 25 Gew.-%, wobei das Gewichtsverhältnis von (a) hochkristalliner Reisschalenasche zu (d) Hohlkugeln mindestens 0,1 beträgt. Erfindungsgemäß besonders bevorzugt ist jedoch die ausschließliche Verwendung von hochkristalliner Reisschalenasche (a).

Enthält die erfindungsgemäße formbare Zusammensetzung als weiteren Füllstoff (d) Reisschalenasche, in der ein Anteil von weniger als 70 % des enthaltenen Siliciumdioxids in Form kristalliner Modifikationen vorliegt, dann beträgt bezogen auf die Gesamtmasse der formbaren Zusammensetzung die Menge solcher Reisschalenasche (d) höchstens 10 Gew.-%.

Ein erfindungsgemäßes Verfahren zur Herstellung einer formbaren Zusammensetzung für die Herstellung von Speisern für die Gießereiindustrie umfasst die Schritte
- Bereitstellen einer hochkristallinen Reisschalenasche (a), die bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid einen Gesamtanteil von mindestens 70 Gew.-%, vorzugsweise mehr als 75 Gew.-% von (i) kristallinen Modifikationen des Siliciumdioxids und (ii) monoklinem Feldspat enthält,
- Mischen der bereitstellten hochkristallinen Reisschalenasche (a) mit (b) Bindemittel, (c) optional Fasermaterial und (d) gegebenenfalls einem oder mehreren weiteren Füllstoffen sowie (e) optional (zum Herstellen eines exothermen Speisers) einem oxidierbares Metall (wie Aluminium, Magnesium oder Silizium) und einem Oxidationsmittel für das oxidierbare Metall, so dass bezogen auf die Gesamtmasse der formbaren Zusammensetzung die Menge der Reisschalenasche (a), die bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid einen Gesamtanteil von mindestens 70 Gew.-%, vorzugsweise mehr als 75 Gew.-% von (i) kristallinen Modifikationen des Siliciumdioxids und (ii) monoklinem Feldspat enthält, an der formbaren Zusammensetzung im Bereich von 5 bis 50 Gew.-%, vorzugsweise 5 bis 25 Gew.-% liegt.

Zur Herstellung der erfindungsgemäßen formbaren Zusammensetzung geeignete Reisschalenasche (a) ist erhältlich, indem Reisschalenasche, die bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid einen Gesamtanteil von weniger als 70 Gew.-% von (i) kristallinen Modifikationen des Siliciumdioxids und (ii) monoklinem Feldspat enthält, bei einer Temperatur von mindestens 1300 °C solange thermisch behandelt wird, bis bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid der Gesamtanteil von (i) kristallinen Modifikationen des Siliciumdioxids und (ii) monoklinem Feldspat auf mindestens 70 Gew.-%, vorzugsweise mehr als 75 Gew.-%, angestiegen ist. Vorzugsweise erfolgt die thermische Behandlung bei einer Temperatur zwischen 1400 und 1500 °C.

Der Kohlenstoffgehalt der Reisschalenasche beträgt vor der thermischen Behandlung bis zu 5 Gew.-%. Während der thermischen Behandlung wird der enthaltene Kohlenstoff weitgehend oxidiert, so dass die ursprünglich schwärzliche Farbe der Reisschalenasche in einen zunächst grauen und schließlich rosa Farbton übergeht. Das Erreichen des rosa Farbtons kann im Allgemeinen als Anhaltspunkt für die Vollständigkeit der thermischen Behandlung, d. h. für das Erreichen des gewünschten Anteils kristalliner Modifikationen am in der Reisschalenasche enthaltenen Siliciumdioxid, herangezogen werden. Daher wird die Reisschalenasche vorzugsweise mindestens solange thermisch behandelt, bis sie einen rosa Farbton angenommen hat.

Zur Herstellung eines erfindungsgemäßen Speisers wird die erfindungsgemäße formbare Zusammensetzung zu einer Speiser geformt und der geformte Speiser ausgehärtet. Der Vorgang des Formens erfolgt dabei vorzugsweise nach dem Slurry-Verfahren (Filterschlickerverfahren), dem Grünstandverfahren, oder dem Cold-Box-Verfahren oder dem Hot-Box-Verfahren, wobei das Cold-Box-Verfahren besonders bevorzugt eingesetzt wird.

### Ausführungsbeispiele

### Beispiel 1

In einem ersten Versuch wurde Reisschalenasche des Typs Nermat AF (Firma Refratechnik Casting GmbH) in einem Hochtemperaturofen bei 1600 °C thermisch behandelt. Die Aufheizrate betrug 6 K/min, die Haltezeit bei der Maximaltemperatur 10 Minuten. Danach hatte die ursprünglich schwärzliche Reisschalenasche einen rosa Farbton angenommen. Durch quantitative Phasenanalyse der Reisschalenasche mittels Röntgendiffraktometrie vor und nach der thermischen Behandlung wurden folgende Anteile von amorphem Siliciumdioxid, von Cristobalit, von Quarz und von Tridymit ermittelt (Tabelle 1):

**Tabelle 1**

| Probe | Ausgangsmaterial Nermat AF | Nach thermischer Behandlung bei 1600 °C |
|---|---|---|
| Phase | Anteil am Gesamtgehalt an SiO₂ Gew.- % | Anteil am Gesamtgehalt an SiO₂ Gew.- % |
| Amorph | 56.4 | 24.0 |
| Cristobalit | 39.7 | 73.2 |
| Quarz | 0.6 | 0.4 |
| Tridymit | 3.3 | 2.4 |

Durch die thermische Behandlung sank der Anteil (iii) des amorphen Siliciumdioxids an der Gesamtmenge der durch quantitative Phasenanalyse mittels Röntgendiffraktometrie nachweisbaren Bestandteile der Reisschalenasche auf weniger als 25 Gew.-%, während der Anteil (i) kristalliner Modifikationen (vorwiegend Cristobalit) des Siliciumdioxids auf über 75 Gew.-% anstieg.

### Beispiel 2

Weitere Sinterversuche mit Reisschalenasche des Typs Nermat AF (Firma Refratechnik Casting GmbH) wurden in einem Tunnelofen mit verschiedenen Vollfeuertemperaturen (1400 °C, 1480 °C und 1550 °C) durchgeführt. Bei jeder Temperatur wurde ein rosafarbenes Produkt erhalten. Durch quantitative Phasenanalyse der Reisschalenasche mittels Röntgendiffraktometrie vor und nach der thermischen Behandlung wurden folgende Anteile von (iii) amorphem Siliciumdioxid, von (i) kristallinen Modifikationen (Cristobalit, Quarz, Tridymit) und von (ii) monoklinem Feldspat ermittelt (Tabelle 2):

**Tabelle 2**

| Probe | Ausgangsmaterial Nermat AF | Nach thermischer Behandlung bei | | |
|---|---|---|---|---|
| | | 1400 °C | 1480 °C | 1550 °C |
| Phase | Anteil Gew.- % | Anteil Gew.- % | Anteil Gew.- % | Anteil Gew.- % |
| Amorph | 56,4 | 6 | 5.9 | 3.2 |
| Cristobalit | 39,7 | 23.1 | 33.6 | 21.5 |
| Tridymit | 3,3 | 67.3 | 57.4 | 72.5 |
| Quarz | 0,6 | 0.6 | 0.4 | 0.5 |
| Feldspat monoklin | - | 3.0 | 2.7 | 2.3 |

Unabhängig von der Vollfeuertemperatur erfolgte in jedem Fall eine weitgehende Umwandlung des amorphen Siliciumdioxids (iii) in (i) kristalline Modifikationen des Siliciumdioxids und gegebenenfalls in (ii) Siliciumdioxid als Bestandteil von monoklinem Feldspat, so dass nach der thermischen Behandlung der Anteil des in amorpher Form vorliegenden Siliciumdioxids an der Gesamtmenge der durch quantitative Phasenanalyse mittels Röntgendiffraktometrie nachweisbaren Bestandteile der Reisschalenasche jeweils weniger als 10 Gew.-% betrug.

### Beispiel 3

Zwei Proben rosafarbener Reisschalenasche sowie zwei Proben der unter der Produktbezeichnung Nermat AF von Refratechnik Casting GmbH kommerziell erhältlichen Reisschalenasche wurden hinsichtlich der mineralogischen Zusammensetzung untersucht. Die Resultate sind wie folgt (Tabelle 3):

**Tabelle 3**

| Probe | Nermat AF Probe 1 | Nermat AF Probe 2 | Rosa Reisschalenasche Probe 1 | Rosa Reisschalenasche Probe 2 |
|---|---|---|---|---|
| Phase | Anteil Gew.- % | Anteil Gew.- % | Anteil Gew.- % | Anteil Gew.- % |
| Amorph | 56,4 | 44,0 | 16,4 | 14,3 |
| Cristobalit | 39,7 | 20,4 | 28,3 | 27,7 |
| Tridymit | 3,3 | 30,9 | 50,6 | 41,2 |
| Quarz | 0,6 | 1,8 | 1,2 | 13,1 |
| Feldspat monoklin | - | 2,9 | 0.7 | 3,7 |

Die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid weist einen Anteil an (iii) amorphem Siliciumdioxid von weniger als 17 Gew.-% (Probe 1) oder sogar weniger als 15 Gew.-% (Probe 2) auf, während ein Anteil von über 80 Gew.-% bzw. über 85 Gew.-% der durch quantitative Phasenanalyse mittels Röntgendiffraktometrie nachweisbaren Bestandteile der Reisschalenasche durch (i) kristalline Modifikationen des Siliciumdioxids und (ii) monoklinen Feldspat gebildet wird. Die Abweichungen in der mineralogischen Zusammensetzung der beiden ProbenNermat AF bzw. rosafarbene Reisschalenasche sind auf die Zugehörigkeit zu verschiedenen Chargen zurückzuführen. Das Ausgangsmaterial der Reisschalenasche unterliegt als Naturprodukt unweigerlich gewissen Qualitätsschwankungen.

### Beispiel 4:

Reisschalenasche des Typs Nermat AF (Firma Refratechnik Casting GmbH) wurde in einem Hochtemperaturofen bei 1400 °C thermisch behandelt. Vor und nach der thermischen Behandlung wurde mittels Röntgenfluoreszenzanalyse die chemische Zusammensetzung der Reisschalenasche bestimmt. Die Resultate sind wie folgt (Tabelle 4):

**Tabelle 4:**

| | Ausgangsmaterial Nermat AF [Gew.-%] | Nach thermischer Behandlung bei 1400 °C [Gew.-%] |
|---|---|---|
| Siliciumdioxid | 91,62 | 96,07 |
| Kaliumoxid | 2,40 | 1,89 |
| Natriumoxid | 0,00 | 0,00 |
| Calciumoxid | 0,90 | 1,04 |
| Magnesiumoxid | 0,47 | 0,41 |
| Aluminiumoxid | 0,00 | 0,00 |
| Eisen-III-Oxid | 0,25 | 0,23 |
| Kohlenstoff | 1,90 | 0,04 |

Der Kohlenstoffanteil wird durch den Sinterprozess deutlich verringert.

Der in der chemischen Analyse ermittelte Gesamtgehalt an Siliciumdioxid setzt sich zusammen aus amorphem Siliciumdioxid, den kristallinen Modifikationen des Siliciumdioxids (Cristobalit, Tridymit und Quarz) sowie gegebenenfalls Siliciumdioxid als Bestandteil von monoklinem Feldspat.

### Beispiel 5: Herstellung und Verwendung von Speiserkapppen

Zwei erfindungsgemäße formbare Zusammensetzungen wurden für die Herstellung von Speiserkappen eingesetzt. Die erste erfindungsgemäße formbare Zusammensetzung (Beispiel 5a, Tabelle 5a) stellt eine Isoliermasse dar, bei der zweiten erfindungsgemäßen formbaren Zusammensetzung (Beispiel 5b, Tabelle 5b) handelt es sich um eine exotherme Speiserheizmasse. Zum Vergleich wurden Speiserkappen aus einer herkömmlichen Isoliermasse bzw. einer herkömmlichen exothermen Speiserheizmasse hergestellt.

**Tabelle 5 (Beispiel 5a, GT= Gewichtsteile):**

| | Herkömmliche isolierende Speisermasse | Erfindungsgemäße isolierende Speisermasse |
|---|---|---|
| Hohlkugeln | 100 GT | 50 GT |
| Hochkristalline Reisschalenasche | - | 50 GT |
| Cold box-Binder | 16 GT | 16 GT |

**Tabelle 5b (Beispiel 5b, GT= Gewichtsteile):**

| | Herkömmliche exotherme Speiserheizmasse | Erfindungsgemäße exotherme Speiserheizmasse |
|---|---|---|
| Aluminiumgrieß | 30 GT | 30 GT |
| Eisenoxid | 6 GT | 8 GT |
| Oxidationsmittel | 16 GT | 16 GT |
| Füllstoff und Additiv | 21 GT | 18 GT |
| Hohlkugeln | 27 GT | |
| Hochkristalline Reisschalenasche | - | 28 GT |
| Coldbox-Binder | 12 GT | 16 GT |

Die Herstellung der Speiserkappen umfasst unabhängig von der eingesetzten formbaren Zusammensetzung die Schritte
- homogenes Mischen der festen Komponenten der formbaren Zusammensetzung,
- Zugabe des Binders,
- Ausformen der Speiserkappe,
- Aushärten der Speiserkappe.

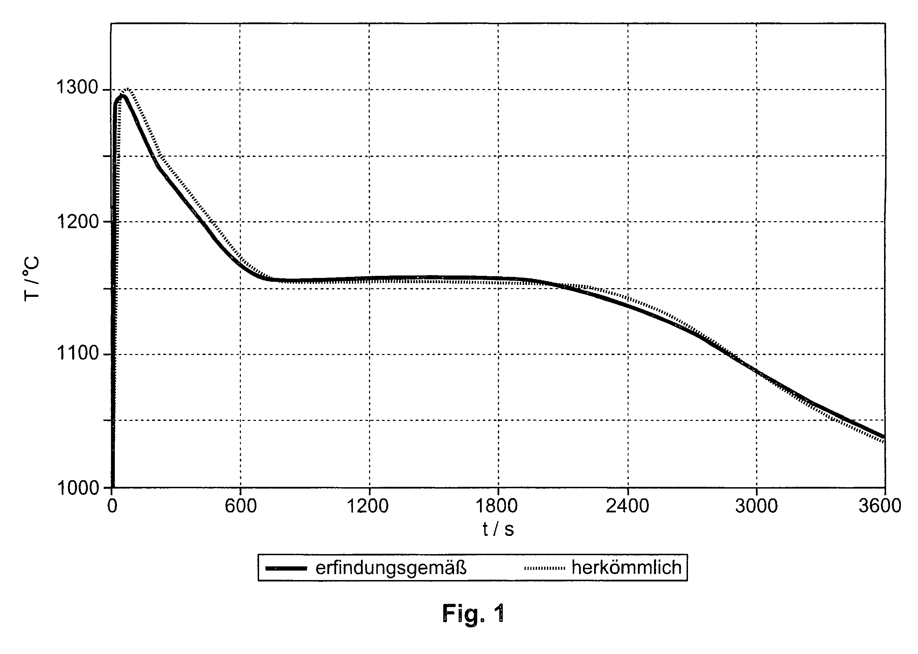

Die eingesetzten erfindungsgemäßen formbaren Zusammensetzungen der Beispiele 5a und 5b erweisen sich als geeignet zur Herstellung von Speiserkappen. Bei Gießversuchen wurde festgestellt, dass sich Speiserkappen umfassend erfindungsgemäße formbare Zusammensetzungen hinsichtlich ihres Abkühlungsverhaltens trotz des geringeren Gehalts an Hohlkugeln kaum von Speiserkappen aus herkömmlichen Speisermassen unterscheiden. Dies zeigt z.B. der Vergleich der Abkühlkurven der Speiserkapppe umfassend eine erfindungsgemäße exotherme formbare Zusammensetzung und der Speiserkappe umfassend eine herkömmliche exotherme formbare Zusammensetzung aus Beispiel 5b (Figur 1).

## Patentansprüche

1. Speiser zur Verwendung in der Gießereiindustrie, umfassend
(a) Reisschalenasche enthaltend bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid einen Gesamtanteil von mindestens 70 Gew.-%, vorzugsweise mehr als 75 Gew.-% von (i) kristallinen Modifikationen des Siliciumdioxids und (ii) monoklinem Feldspat,
(b) ausgehärtetes Bindemittel,
(c) optional Fasermaterial,
(d) gegebenenfalls einen oder mehrere weitere Füllstoffe,
(e) optional ein oxidierbares Metall und ein Oxidationsmittel für das oxidierbare Metall.

2. Speiser nach einem der vorhergehenden Ansprüche, **dadurch gekennzeichnet, dass** der in Form kristalliner Modifikationen vorliegende Anteil des in der Reisschalenasche (a) enthaltenen Siliciumdioxids Anteile einer oder mehrerer kristalliner Modifikationen des Siliciumdioxids aus der Gruppe bestehend aus Cristobalit, Tridymit, Quarz enthält.

3. Speiser nach einem der vorhergehenden Ansprüche, **dadurch gekennzeichnet, dass**
- der Kohlenstoffgehalt der Reisschalenasche (a) weniger als 1 Gew.-%, vorzugsweise weniger als 0,1 Gew.-% beträgt,
und/oder
- die Korngröße der Reisschalenasche (a) 0,2 bis 2 mm, vorzugsweise 0,2 bis 1,5 mm, beträgt,
und/oder
- die Schüttdichte der Reisschalenasche (a) 200 bis 400 g/Liter beträgt,
und/oder
- die Wärmeleitfähigkeit der Reisschalenasche (a) 0,12 bis 0,13 W/mK bei 100 °C und 0,39 bis 0,4 W/mK bei 1000 °C beträgt.

4. Speiser nach einem der vorhergehenden Ansprüche, **dadurch gekennzeichnet, dass** das ausgehärtete Bindemittel (b) das Aushärtungsprodukt eines Zwei-Komponenten-System ist, das ein freie Hydroxylgruppen enthaltendes Phenolharz und ein Poly-Isocyanat als Reaktionspartner umfasst.

5. Speiser nach einem der vorhergehenden Ansprüche, **dadurch gekennzeichnet, dass** als weiterer Füllstoff (d) Hohlkugeln enthalten sind,
wobei bezogen auf die Gesamtmasse der formbaren Zusammensetzung des Speisers die Gesamtmenge an
(a) Reisschalenasche enthaltend bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid einen Gesamtanteil von mindestens 70 Gew.-%, vorzugsweise mehr als 75 Gew.-% von (i) kristallinen Modifikationen des Siliciumdioxids und (ii) monoklinem Feldspat,
und
(d) Hohlkugeln
im Bereich von 5 bis 90 Gew-%, vorzugsweise von 5 bis 25 liegt, und das Gewichtsverhältnis der Reisschalenasche (a) zu Hohlkugeln (d) mindestens 0,1 beträgt.

6. Speiser nach einem der vorhergehenden Ansprüche, **dadurch gekennzeichnet, dass** als weiterer Füllstoff (d) Reisschalenasche enthalten ist, die bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid einen Gesamtanteil von weniger als 70 Gew.-% von (i) kristallinen Modifikationen des Siliciumdioxids und (ii) monoklinem Feldspat enthält, und bezogen auf die Gesamtmasse der formbaren Zusammensetzung des Speisers die Menge solcher Reisschalenasche (d) höchstens 10 Gew.-% beträgt.

7. Formbare Zusammensetzung für die Herstellung von Speisern für die Gießereiindustrie, umfassend
(a) Reisschalenasche, enthaltend bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid einen Gesamtanteil von mindestens 70 Gew.-%, vorzugsweise mehr als 75 Gew.-% von (i) kristallinen Modifikationen des Siliciumdioxids und (ii) monoklinem Feldspat,
(b) Bindemittel,
(c) optional Fasermaterial,
(d) gegebenenfalls einen oder mehrere weitere Füllstoffe,
(e) optional mindestens ein oxidierbares Metall und ein Oxidationsmittel für das oxidierbare Metall.

8. Formbare Zusammensetzung nach Anspruch 7, **dadurch gekennzeichnet, dass** das Bindemittel (b) ein Zwei-Komponenten-System ist, das ein freie Hydroxylgruppen (OH-Gruppen) enthaltendes Phenolharz und ein Poly-Isocyanat als Reaktionspartner umfasst.

9. Formbare Zusammensetzung nach einem der Ansprüche 7 oder 8, **dadurch gekennzeichnet, dass**
als weiterer Füllstoff (d) Hohlkugeln enthalten sind,
wobei bezogen auf die Gesamtmasse der formbaren Zusammensetzung die Gesamtmenge an
(a) Reisschalenasche, enthaltend bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid einen Gesamtanteil von mindestens 70 Gew.-%, vorzugsweise mehr als 75 Gew.-% von (i) kristallinen Modifikationen des Siliciumdioxids und (ii) monoklinem Feldspat,
und
(d) Hohlkugeln
im Bereich von 5 bis 90 Gew.-%, vorzugsweise von 5 bis 25 liegt und das Gewichtsverhältnis der Reisschalenasche (a) zu Hohlkugeln (d) mindestens 0,1 beträgt.

10. Formbare Zusammensetzung nach einem Ansprüche 7 bis 9, **dadurch gekennzeichnet, dass** als weiterer Füllstoff (d) Reisschalenasche enthalten ist, die bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid einen Gesamtanteil von weniger als 70 Gew.-% von (i) kristallinen Modifikationen des Siliciumdioxids und (ii) monoklinem Feldspat enthält,
und bezogen auf die Gesamtmasse der formbaren Zusammensetzung die Menge solcher Reisschalenasche (d), in der ein Anteil von weniger als 70 % des enthaltenen Siliciumdioxids in Form kristalliner Modifikationen vorliegt, höchstens 10 Gew.-% beträgt.

11. Verfahren zur Herstellung einer formbaren Zusammensetzung für die Herstellung von Speisern für die Gießereiindustrie, umfassend die Schritte
- Bereitstellen einer Reisschalenasche (a) enthaltend bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid einen Gesamtanteil von mindestens 70 Gew.-%, vorzugsweise mehr als 75 Gew.-% von (i) kristallinen Modifikationen des Siliciumdioxids und (ii) monoklinem Feldspat,
- Mischen der bereitgestellten Reisschalenasche (a) mit
(b) Bindemittel,
(c) optional Fasermaterial und
(d) gegebenenfalls einem oder mehreren weiteren Füllstoffen
(e) optional einem oxidierbaren Metall und einem Oxidationsmittel für das oxidierbare Metall,
so dass bezogen auf die Gesamtmasse der formbaren Zusammensetzung die Menge der Reisschalenasche (a), die bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid einen Gesamtanteil von mindestens 70 Gew.-%, vorzugsweise mehr als 75 Gew.-% von (i) kristallinen Modifikationen des Siliciumdioxids und (ii) monoklinem Feldspat enthält, in der formbaren Zusammensetzung im Bereich von 5 bis 50 Gew.-%, vorzugsweise 5 bis 25 Gew.-% liegt.

12. Verfahren nach Anspruch 11, **dadurch gekennzeichnet, dass** Reisschalenasche, die bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid einen Gesamtanteil von weniger als 70 Gew.-% von (i) kristallinen Modifikationen des Siliciumdioxids und (ii) monoklinem Feldspat enthält, bei einer Temperatur von mindestens 1300 °C solange thermisch behandelt wird, bis bezogen auf die Gesamtmenge der in der Reisschalenasche durch quantitative Phasenanalyse mittels Röntgendiffraktometrienachweisbaren Bestandteile (i) kristalline Modifikationen des Siliciumdioxids, (ii) monokliner Feldspat und (iii) amorphes Siliciumdioxid der Gesamtanteil von (i) kristallinen Modifikationen des Siliciumdioxids und (ii) monoklinem Feldspat auf mindestens 70 Gew.-%, vorzugsweise mehr als 75 Gew.-%, angestiegen ist.

13. Verfahren nach einem der Ansprüche 11 und 12, **dadurch gekennzeichnet, dass** die thermische Behandlung bei einer Temperatur zwischen 1400 und 1500 °C erfolgt.

14. Verfahren nach einem der Ansprüche 11 bis 13, **dadurch gekennzeichnet, dass** die Reisschalenasche mindestens solange thermisch behandelt wird, bis sie einen rosa Farbton angenommen hat.

15. Verwendung von Reisschalenasche (a) enthaltend bezogen auf die Gesamtmenge der in der Reisschalenasche durch quantitative Phasenanalyse mittels Röntgendiffraktometrie nachweisbaren Bestandteile (i) kristalline Modifikationen des Siliciumdioxids, (ii) monokliner Feldspat und (iii) amorphes Siliciumdioxid einen Gesamtanteil von mindestens 70 Gew.-%, vorzugsweise mehr als 75 Gew.-% von (i) kristallinen Modifikationen des Siliciumdioxids und (ii) monoklinem Feldspat, als Leichtfüllstoff in einer formbaren Zusammensetzung für die Herstellung von Speisern für die Gießereiindustrie.

## Claims

1. Feeder for use in the foundry industry, comprising
(a) rice husk ash containing, based on the total amount of the constituents detectable in the rice husk ash by quantitative phase analysis by means of x-ray diffractometry (i) crystalline modifications of silicon dioxide, (ii) monoclinic feldspar and (iii) amorphous silicon dioxide, a total content of at least 70 wt.%, preferably more than 75 wt.% of (i) crystalline modifications of silicon dioxide and (ii) monoclinic feldspar,
(b) cured binder
(c) optionally fibre material,
(d) optionally one or more further fillers,
(e) optionally an oxidizable metal and an oxidizing agent for the oxidizable metal.

2. Feeder according to one of the preceding claims, **characterized in that** the content of the silicon dioxide contained in the rice husk ash which is present in the form of crystalline modifications contains proportions of one or more crystalline modifications of silicon dioxide from the group consisting of cristobalite, tridymite and quartz.

3. Feeder according to one of the preceding claims, **characterized in that**
- the carbon content of the rice husk ash (a) is less than 1 wt.%, preferably less than 0.1 wt.%,
and/or
- the grain size of the rice husk ash (a) is 0.2 to 2 mm, preferably 0.2 to 1.5 mm,
and/or
- the bulk density of the rice husk ash (a) is 200 to 400 g/litre,
and/or
- the thermal conductivity of the rice husk ash (a) is 0.12 to 0.13 W/mK at 100 °C and 0.39 to 0.4 W/mK at 1,000 °C.

4. Feeder according to one of the preceding claims, **characterized in that** the cured binder (b) is the curing product of a two-component system which comprises a phenolic resin containing free hydroxyl groups and a polyisocyanate as a reaction partner.

5. Feeder according to one of the preceding claims, **characterized in that** it contains hollow spheres as a further filler (d),
wherein, based on the total weight of the formable composition of the feeder, the total amount of
(a) rice husk ash containing, based on the total amount of the constituents detectable in the rice husk ash by quantitative phase analysis by means of x-ray diffractometry (i) crystalline modifications of silicon dioxide, (ii) monoclinic feldspar and (iii) amorphous silicon dioxide, a total content of at least 70 wt.%, preferably more than 75 wt.% of (i) crystalline modifications of silicon dioxide and (ii) monoclinic feldspar,
and
(d) hollow spheres
is in the range of from 5 to 90 wt.%, preferably from 5 to 25 wt.%, and the weight ratio of the rice husk ash (a) to hollow spheres (d) is at least 0.1.

6. Feeder according to one of the preceding claims, **characterized in that** it contains as a further filler (d) rice husk ash which contains, based on the total amount of the constituents detectable in the rice husk ash by quantitative phase analysis by means of x-ray diffractometry (i) crystalline modifications of silicon dioxide, (ii) monoclinic feldspar and (iii) amorphous silicon dioxide, a total content of less than 70 wt.% of (i) crystalline modifications of silicon dioxide and (ii) monoclinic feldspar, and, based on the total weight of the formable composition of the feeder, the amount of such rice husk ash (d) is at most 10 wt.%.

7. Formable composition for the production of feeders for the foundry industry, comprising
(a) rice husk ash containing, based on the total amount of the constituents detectable in the rice husk ash by quantitative phase analysis by means of x-ray diffractometry (i) crystalline modifications of silicon dioxide, (ii) monoclinic feldspar and (iii) amorphous silicon dioxide, a total content of at least 70 wt.%, preferably more than 75 wt.% of (i) crystalline modifications of silicon dioxide and (ii) monoclinic feldspar,
(b) binder,
(c) optionally fibre material,
(d) optionally one or more further fillers,
(e) optionally at least one oxidizable metal and an oxidizing agent for the oxidizable metal.

8. Formable composition according to claim 7, **characterized in that** the binder (b) is a two-component system which comprises a phenolic resin containing free hydroxyl groups (OH groups) and a polyisocyanate as a reaction partner.

9. Formable composition according to one of claims 7 or 8, **characterized in that** it contains hollow spheres as a further filler (d),
wherein, based on the total weight of the formable composition, the total amount of
(a) rice husk ash containing, based on the total amount of the constituents detectable in the rice husk ash by quantitative phase analysis by means of x-ray diffractometry (i) crystalline modifications of silicon dioxide, (ii) monoclinic feldspar and (iii) amorphous silicon dioxide, a total content of at least 70 wt.%, preferably more than 75 wt.% of (i) crystalline modifications of silicon dioxide and (ii) monoclinic feldspar,
and
(d) hollow spheres
is in the range of from 5 to 90 wt.%, preferably from 5 to 25 wt.%, and the weight ratio of the rice husk ash (a) to hollow spheres (d) is at least 0.1.

10. Formable composition according to one of claims 7 to 9, **characterized in that** it contains as a further filler (d) rice husk ash which contains, based on the total amount of the constituents detectable in the rice husk ash by quantitative phase analysis by means of x-ray diffractometry (i) crystalline modifications of silicon dioxide, (ii) monoclinic feldspar and (iii) amorphous silicon dioxide, a total content of less than 70 wt.% of (i) crystalline modifications of silicon dioxide and (ii) monoclinic feldspar,
and, based on the total weight of the formable composition, the amount of such rice husk ash (d) in which a content of less than 70 % of the contained silicon dioxide is present in the form of crystalline modifications, is at most 10 wt.%.

11. Process for the preparation of a formable composition for the production of feeders for the foundry industry, comprising the steps
- providing a rice husk ash (a) containing, based on the total amount of the constituents detectable in the rice husk ash by quantitative phase analysis by means of x-ray diffractometry (i) crystalline modifications of silicon dioxide, (ii) monoclinic feldspar and (iii) amorphous silicon dioxide, a total content of at least 70 wt.%, preferably more than 75 wt.% of (i) crystalline modifications of silicon dioxide and (ii) monoclinic feldspar,
- mixing of the provided rice husk ash (a) with
(b) binder,
(c) optionally fibre material and
(d) optionally one or more further fillers
(e) optionally an oxidizable metal and an oxidizing agent for the oxidizable metal,
so that, based on the total weight of the formable composition, the amount of rice husk ash (a) which contains, based on the total amount of the constituents detectable in the rice husk ash by quantitative phase analysis by means of x-ray diffractometry (i) crystalline modifications of silicon dioxide, (ii) monoclinic feldspar and (iii) amorphous silicon dioxide, a total content of at least 70 wt.%, preferably more than 75 wt.% of (i) crystalline modifications of silicon dioxide and (ii) monoclinic feldspar, in the formable composition is in the range of from 5 to 50 wt.%, preferably 5 to 25 wt.%.

12. Process according to claim 11, **characterized in that** rice husk ash which contains, based on the total amount of the constituents detectable in the rice husk ash by quantitative phase analysis by means of x-ray diffractometry (i) crystalline modifications of silicon dioxide, (ii) monoclinic feldspar and (iii) amorphous silicon dioxide, a total content of less than 70 wt.% of (i) crystalline modifications of silicon dioxide and (ii) monoclinic feldspar, is heat-treated at a temperature of at least 1,300 °C until, based on the total amount of the constituents detectable in the rice husk ash by quantitative phase analysis by means of x-ray diffractometry (i) crystalline modifications of silicon dioxide, (ii) monoclinic feldspar and (iii) amorphous silicon dioxide, the total content of (i) crystalline modifications of silicon dioxide and (ii) monoclinic feldspar has risen to at least 70 wt.%, preferably more than 75 wt.%.

13. Process according to one of claims 11 and 12, **characterized in that** the heat treatment is carried out at a temperature of between 1,400 and 1,500 °C.

14. Process according to one of claims 11 to 13, **characterized in that** the rice husk ash is heat-treated at least until it has assumed a pink colour shade.

15. Use of rice husk ash (a) containing, based on the total amount of the constituents detectable in the rice husk ash by quantitative phase analysis by means of x-ray diffractometry (i) crystalline modifications of silicon dioxide, (ii) monoclinic feldspar and (iii) amorphous silicon dioxide, a total content of at least 70 wt.%, preferably more than 75 wt.% of (i) crystalline modifications of silicon dioxide and (ii) monoclinic feldspar as a lightweight filler in a formable composition for the production of feeders for the foundry industry.

## Revendications

1. Masselotte pour son utilisation dans l'industrie de fonderie, comprenant
(a) de la cendre de balle de riz contenant par rapport à la quantité totale des composants détectables par analyse de phase quantitative au moyen de la diffractométrie aux rayons X dans la cendre de balle de riz (i) modifications cristallines du dioxyde de silicium, (ii) feldspath monoclinique et (iii) dioxyde de silicium amorphe, une proportion totale d'au moins 70 % en poids, de préférence supérieure à 75 % en poids de (i) modifications cristallines du dioxyde de silicium et (ii) de feldspath monoclinique,
(b) un liant durci,
(c) facultativement un matériau fibreux,
(d) éventuellement un ou plusieurs autres agents de charge,
(e) facultativement un métal oxydable et un agent d'oxydation pour le métal oxydable.

2. Masselotte selon l'une des revendications précédentes, **caractérisée en ce que** la proportion de dioxyde de silicium contenu dans la cendre de balle de riz (a), se présentant sous la forme de modifications cristallines, contient des proportions d'une ou plusieurs modifications cristallines du dioxyde de silicium du groupe constitué de cristobalite, tridymite, quartz.

3. Masselotte selon l'une des revendications précédentes, **caractérisée en ce que**
- la teneur en carbone de la cendre de balle de riz (a) est inférieure à 1 % en poids, de préférence, inférieure à 0,1 % en poids,
et/ou
- la granulométrie de la cendre de balle de riz (a) est de 0,2 à 2 mm, de préférence, 0,2 à 1,5 mm,
et/ou
- la densité apparente de la cendre de balle de riz (a) est de 200 à 400 g/litre,
et/ou
- la conductibilité thermique de la cendre de balle de riz (a) est de 0,12 à 0,13 W/mK à 100 °C et de 0,39 à 0,4 W/mK à 1000 °C.

4. Masselotte selon l'une des revendications précédentes, **caractérisée en ce que** le liant durci (b) est le produit de durcissement d'un système à deux composants qui comprend une résine phénolique contenant des groupes hydroxyle libres et un poly-isocyanate comme partenaire réactionnel.

5. Masselotte selon l'une des revendications précédentes, **caractérisée en ce que** sont contenues comme autre agent de charge (d) des billes creuses,
dans laquelle par rapport à la masse totale de la composition façonnable de la masselotte, la quantité totale de
(a) cendre de balle de riz contenant par rapport à la quantité totale des composants détectables par analyse de phase quantitative au moyen de la diffractométrie aux rayons X dans la cendre de balle de riz (i) modifications cristallines du dioxyde de silicium, (ii) feldspath monoclinique et (iii) dioxyde de silicium amorphe, une proportion totale d'au moins 70 % en poids, de préférence supérieure à 75 % en poids de (i) modifications cristallines du dioxyde de silicium et (ii) de feldspath monoclinique,
et
(d) des billes creuses
se situe dans la plage de 5 à 90 % en poids, de préférence de 5 à 25, et le rapport en poids de la cendre de balle de riz (a) aux billes creuses (d) est d'au moins 0,1.

6. Masselotte selon l'une des revendications précédentes, **caractérisée en ce qu'**est contenue comme autre agent de charge (d) une cendre de balle de riz qui contient par rapport à la quantité totale des composants détectables par analyse de phase quantitative au moyen de la diffractométrie aux rayons X dans la cendre de balle de riz (i) modifications cristallines du dioxyde de silicium, (ii) feldspath monoclinique et (iii) dioxyde de silicium amorphe, une proportion totale de moins de 70 % en poids de (i) modifications cristallines du dioxyde de silicium et (ii) de feldspath monoclinique, et par rapport à la masse totale de la composition façonnable de la masselotte, la quantité de cette cendre de balle de riz (d) est au plus de 10 % en poids.

7. Composition façonnable pour la fabrication de masselottes pour l'industrie de fonderie, comprenant
(a) de la cendre de balle de riz contenant par rapport à la quantité totale des composants détectables par analyse de phase quantitative au moyen de la diffractométrie aux rayons X dans la cendre de balle de riz (i) modifications cristallines du dioxyde de silicium, (ii) feldspath monoclinique et (iii) dioxyde de silicium amorphe, une proportion totale d'au moins 70 % en poids, de préférence supérieure à 75 en poids de (i) modifications cristallines du dioxyde de silicium et (ii) de feldspath monoclinique,
(b) un liant durci,
(c) facultativement un matériau fibreux,
(d) éventuellement un ou plusieurs autres agents de charge,
(e) facultativement au moins un métal oxydable et un agent d'oxydation pour le métal oxydable.

8. Composition façonnable selon la revendication 7, **caractérisée en ce que** le liant (b) est un système à deux composants qui comprend une résine phénolique contenant des groupes hydroxyle libres et un poly-isocyanate comme partenaire réactionnel.

9. Composition façonnable selon l'une des revendications 7 ou 8, **caractérisée en ce que**
sont contenues comme autre agent de charge (d) des billes creuses,
dans laquelle par rapport à la masse totale de la composition façonnable, la quantité totale de
(a) cendre de balle de riz contenant par rapport à la quantité totale des composants détectables par analyse de phase quantitative au moyen de la diffractométrie aux rayons X dans la cendre de balle de riz (i) modifications cristallines du dioxyde de silicium, (ii) feldspath monoclinique et (iii) dioxyde de silicium amorphe, une proportion totale d'au moins 70 % en poids, de préférence supérieure à 75 % en poids de (i) modifications cristallines du dioxyde de silicium et (ii) de feldspath monoclinique,
et
(d) des billes creuses
se situe dans la plage de 5 à 90 % en poids, de préférence de 5 à 25, et le rapport en poids de la cendre de balle de riz (a) aux billes creuses (d) est d'au moins 0,1.

10. Composition façonnable selon l'une des revendications 7 à 9, **caractérisée en ce qu'**est contenue comme autre agent de charge (d) une cendre de balle de riz qui contient par rapport à la quantité totale des composants détectables par analyse de phase quantitative au moyen de la diffractométrie aux rayons X dans la cendre de balle de riz (i) modifications cristallines du dioxyde de silicium, (ii) feldspath monoclinique et (iii) dioxyde de silicium amorphe, une proportion totale de moins de 70 % en poids de (i) modifications cristallines du dioxyde de silicium et (ii) de feldspath monoclinique,
et par rapport à la masse totale de la composition façonnable, la quantité de cette cendre de balle de riz (d) dans laquelle une proportion inférieure à 70 % du dioxyde de silicium contenu se présente sous la forme de modifications cristallines, est au plus de 10 % en poids.

11. Procédé de fabrication d'une composition façonnable pour la fabrication de masselottes pour l'industrie de fonderie, comprenant les étapes suivantes
- mise à disposition d'une cendre de balle de riz (a) contenant par rapport à la quantité totale des composants détectables par analyse de phase quantitative au moyen de la diffractométrie aux rayons X dans la cendre de balle de riz (i) modifications cristallines du dioxyde de silicium, (ii) feldspath monoclinique et (iii) dioxyde de silicium amorphe, une proportion totale d'au moins 70 % en poids, de préférence supérieure à 75 % en poids de (i) modifications cristallines du dioxyde de silicium et (ii) de feldspath monoclinique,
- mélange de la cendre de balle de riz (a) mise à disposition avec
(b) un liant durci,
(c) facultativement un matériau fibreux et
(d) éventuellement un ou plusieurs autres agents de charge
(e) facultativement un métal oxydable et un agent d'oxydation pour le métal oxydable,
de sorte que par rapport à la masse totale de la composition façonnable, la quantité de cendre de balle de riz (a) qui contient par rapport à la quantité totale des composants détectables par analyse de phase quantitative au moyen de la diffractométrie aux rayons X dans la cendre de balle de riz (i) modifications cristallines du dioxyde de silicium, (ii) feldspath monoclinique et (iii) dioxyde de silicium amorphe, une proportion totale d'au moins 70 % en poids, de préférence de plus de 75 % de (i) modifications cristallines du dioxyde de silicium et (ii) de feldspath monoclinique se situe dans la composition façonnable dans la plage de 5 à 50 % en poids, de préférence de 5 à 25 % en poids.

12. Procédé selon la revendication 11, **caractérisé en ce que** de la cendre de balle de riz qui contient par rapport à la quantité totale des composants détectables par analyse de phase quantitative au moyen de la diffractométrie aux rayons X dans la cendre de balle de riz (i) modifications cristallines du dioxyde de silicium, (ii) feldspath monoclinique et (iii) dioxyde de silicium amorphe, une proportion totale de moins de 70 % en poids de (i) modifications cristallines du dioxyde de silicium et (ii) de feldspath monoclinique est traitée thermiquement à une température d'au moins 1300 °C jusqu'à ce que, par rapport à la quantité totale des composants détectables par analyse de phase quantitative au moyen de la diffractométrie aux rayons X dans la cendre de balle de riz (i) modifications cristallines du dioxyde de silicium, (ii) feldspath monoclinique et (iii) dioxyde de silicium amorphe, la proportion totale de (i) modifications cristallines du dioxyde de silicium et (ii) de feldspath monoclinique soit portée à au moins 70 % en poids, de préférence à plus de 75 % en poids.

13. Procédé selon l'une des revendications 11 et 12, **caractérisé en ce que** le traitement thermique s'effectue à une température entre 1400 et 1500 °C.

14. Procédé selon l'une des revendications 11 à 13, **caractérisé en ce que** la cendre de balle de riz est traitée thermiquement au moins jusqu'à ce qu'elle prenne une couleur rose.

15. Utilisation de la cendre de balle de riz (a) contenant par rapport à la quantité totale des composants détectables par analyse de phase quantitative au moyen de la diffractométrie aux rayons X dans la cendre de balle de riz (i) modifications cristallines du dioxyde de silicium, (ii) feldspath monoclinique et (iii) dioxyde de silicium amorphe, une proportion totale d'au moins 70 % en poids, de préférence supérieure à 75 % en poids de (i) modifications cristallines du dioxyde de silicium et (ii) de feldspath monoclinique, comme agent de charge léger dans une composition façonnable pour la fabrication de masselottes pour l'industrie de fonderie.
